# EUROPEAN PATENT APPLICATION

(11) **EP 1 396 197 A1**
(43) Date of publication of application: **10.03.2004**
(21) Application number: 02738187.0
(22) Date of filing: 10.06.2002
(51) Int. Cl.: A23N 17/00

(54) **METHOD FOR OBTAINING COMPLETE FEED FOR LIVESTOCK**

(30) Priority: 11.06.2001 ES 200101344
(71) Applicant: Material Ganadero Canar S.L., 50420 Cadrete, Zaragoza (ES)
(72) Inventor: BLANCO ARANDA, Rafael, 50420 Cadrete, Zaragoza (ES)
(74) Representative: Isern Jara, Nuria
(86) International application number: PCT/ES2002/000283
(87) International publication number: WO 2002/100195

(57) **Abstract**

Procedure for the obtaining of complete livestock feed, the aim of which is for a compact installation that allows the manufacture of animal feed, especially for sheep and ruminants, in such a way that a complete ration of the dry product is supplied, which is well ground and mixed and made up of particles smaller than usual. The installation is comprised of a frame fitted with a conveyor belt for bales of straw or fodder, a shredder for the bales and a mill for said straw and the pellets supplied by some silos and regulated by product corrector dispensers present in grain dispenser hoppers. The ground product is transported directly by a raw material piping to an air and dust separation cyclone into which is fitted a dispenser for solid additives and a liquid additive spray and a powder particle precipitator. Said hopper has its discharge outlet connected to transportation pipe for the final product to a distributor for consumption by the livestock.

## Description

### AIM OF THE INVENTION

The aim of this present application for an Invention Patent is to register a procedure for the obtaining of a complete feed for livestock and the installation for its production.

More specifically the new invention is comprised of a greater integration of the components that are used in the production procedure for the obtaining of the feed and its specific adaptation to the possible working situations.

### BACKGROUND TO THE INVENTION

It is known that the conventional systems of feeding sheep or ruminants are based on the shepherd or farmer supplying the fodder, grains and straw in troughs or hoppers, or either taking the livestock out to pasture, carrying out the feeding to the best of their knowledge, but without any type of control.

These methods of feeding, totally subjective, have the disadvantage that they supply an excess of food, as the sheep or ruminant is never satisfied and eats all the food that is provided.

In addition, the shepherd or farmer has to be concerned daily with the feeding, hence free time, including weekends and holidays, is considerably restricted.

The aim of the Spanish patent number 97.00372, belonging to the applicant, is for a procedure for the obtaining of a complete feed for livestock, in which automatically said feed is generated from the baled or rolled straw and grain and other food products for its preparation in a balanced way and for distribution by means of machines for the grinding and chopping up of the straw and mixing with the pellets, the barley and minerals or salts in a homogeneous way. In addition, said procedure claimed in the patent, allows the carrying out of all this process automatically and freely regulated, controlled by computer that has the distribution means for the said product to the livestock in a correct manner, avoiding bad feeding habits.

### DESCRIPTION OF THE INVENTION

The improvements object of this present registration are mainly characterised in that they are made up on a monobloc device that includes a storage conveyor belt for the bales of straw or fodder on a frame that automatically feeds a shredder roller. Said feeding is made by means of a new hatch that moves up and down for the introduction of large sized or round bales. The shredder roller loosens the straw and fodder from the bales and converts it into blades suitable for mixing with other additives. A series of silos are to be found located independently over the frame in which the pellets are stored, said silos can house products such as barley, oats, wheat or other foodstuffs and present each one to a worm screw for extraction of the contents and its removal to a hopper for mixing which has elements for the regulation of the amount of product to be supplied. Adjacent to the frame there is a hammer mill turned by an electric motor for the grinding and correct mixing of the straw or fodder with the pellets.

The ground product or raw material is transferred by means of a pipe to a cyclone where there is an air and dust extraction fan so that the product remains clean. The product passes from the cyclone to a receiver hopper where there is a doser for phosphates, minerals and salts for the correction of the nutritive properties of the complete feed. In turn, said hopper has a spray tank that reduces the amount of dust in the feed, also adding the liquid products that are considered necessary.

Said receiver hopper discharges its contents by a product outlet pipe to a direct distributor for the feeding hopper or trough. However, as an alternative it can discharge to a silo for distribution.

All the mechanism is controlled by a computer that governs an electric generator and all the electric motors of the different devices, being able to start the machine working in a programmed way for the time that is considered necessary. In this way, the feeding of the livestock can be carried out in a completely automatic way without the supervision of a worker.

In order to complete the description that will be made below and for the purpose of giving a greater understanding of its characteristics, this present descriptive memorandum is accompanied by a drawing, that is illustrative but not limiting, where the most significant details of the invention can be seen.

### BRIEF DESCRIPTION OF THE DESIGNS

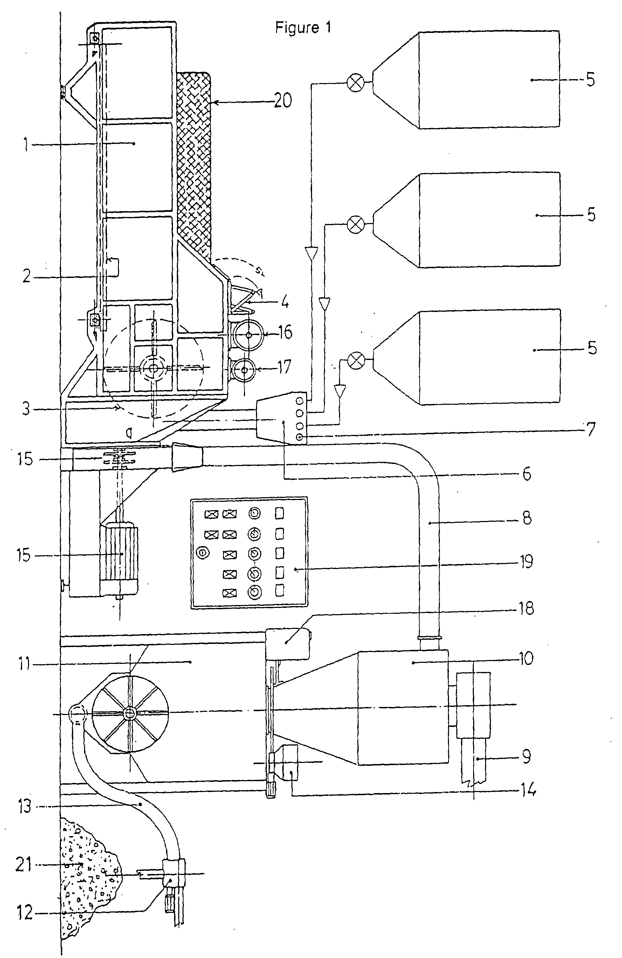

The only drawing shows the plan of a practical manner of carrying out the invention.

### DESCRIPTION OF A PREFERRED EMBODIMENT

In regard to the above-mentioned drawings and in accordance with the numbering used, the preferred manner of carrying out the invention can be seen in same, although it is not limiting for the invention. It is comprised of a frame (1) or framework reinforcement to which is fitted at the top a conveyor belt (2), moved by an electric motor (16), bales (20) of straw or fodder by means of a moveable flap (4) to a roller (3) shredder activated by an electric motor (17) on one side of the frame (1). Said roller shredder (3) is coupled to an electrically driven hammer mill (15). Between the shredder (3) roller and the hammer mill (15) there is a hopper (6) discharge where there are the outlets pipes coming from a series of silos (5) containers with various products such as pellets and other similar products. Each one of the silos (5) has in its discharge outlet, an extraction worm screw connected to the above-mentioned discharge pipe to a regulator (7) device for the dosing into the stated hopper (6). The hammer mill (15) has an outlet connected to a raw material transport pipe (8) that goes to a cyclone (10) with an upper air and dust outlet (9) and a collection hopper and lower mixer (11). Said collection hopper and mixer (11) in turn, has a corrector dispenser (14) for solid additives and a spray tank (18) for liquid additives and dust a precipitator. Said hopper (11) has its discharge outlet coupled to an outlet (13) pipe for the transport of the-final product (21) to a distributor (12). A control panel (19) and programming of the installation is fitted preferably adjacent to the frame (1).

## Claims

1. Procedure for the obtaining of complete livestock feed, which is made up of a roller (3) shredder for bales (20) of straw and fodder, some silos (5) of pellets for addition, a chopping (15) mill for the straw or fodder and the pellets as the raw materials separated in a cyclone (10) for discharge into a collection (11) hopper and mixer for the final product (21), basically **characterised in that** it is made up from a monobloc frame (1) to which a conveyor belt (2) is connected for the storage of the bales (20) of straw or fodder introduced by a folding door (4) to a shredder roller (3) also fitted to said frame (1); **in that** is coupled to said frame (1) there is the pellet mill (15) fitted next to the stated shredder (3) roller, being located between both the hopper outlet (6) of the pellet supply coming from the storage silos (5); and **in that** said hoppers (6) have the respective regulation devices (7) and correctors for the contents supplied by the worm screws of each silo (5).

2. Procedure for the obtaining of complete livestock feed, in accordance with claim 1, **characterised in that** the mill (15) is directly connected to a pipe (8) for the transporting of the ground raw material to a cyclone (10) fitted above the hopper (11) collector/mixer, with an upper (9) air and dust outlet; and **in that** said hopper (11) collector/mixer has a corrector dispenser (14) adjacent for solid additives, such as minerals and salts and, in addition a sprayer tank (18) for liquid additives and a dust precipitator.

3. Procedure for the obtaining of complete livestock feed, in accordance with claim 1, it is **characterised in that** there is an outlet pipe (13) and transport of the final product (21) in the hopper (11) to the distributor (12); and **in that** there is a control panel (19) and programming provided, preferably adjacent to the frame (1), operationally suitable to start up the electricity supply generator and each one of the devices and motors needed for the working of the installation.
